# EUROPÄISCHE PATENTSCHRIFT

(11) **EP 1 798 621 B1**
(45) Veröffentlichungstag und Bekanntmachung des Hinweises auf die Patenterteilung: **15.05.2013**
(21) Anmeldenummer: 06120951.6
(22) Anmeldetag: 20.09.2006
(51) Int. Cl.: G05D 1/02, G05D 1/00

(54) **System zum führen und operieren eines Fahrzeugs ohne Fahrer**
System for steering and operating a vehicle without driver
Système destiné à diriger et commander un véhicule sans conducteur

(30) Priorität: 13.12.2005 DE 102005059517
(43) Veröffentlichungstag der Anmeldung: 20.06.2007
(73) Patentinhaber: RUAG COEL GmbH, 22880 Wedel (DE)
(72) Erfinder: Zoller, Ferdinand, 83043 Bad Aibling (DE)
(74) Vertreter: TBK

(56) Entgegenhaltungen:
- US-A1- 2004 027 255
- US-A1- 2004 158 355
- SATO K ET AL: "Development and field experiments of phased array antenna for land vehicle satellite communications", PROCEEDINGS OF THE ANTENNAS AND PROPAGATION SOCIETY INTERNATIONAL SYMPOSIUM (APSIS). CHICAGO, JULY 20 - 24, 1992; [PROCEEDINGS OF THE ANTENNAS AND PROPAGATION SOCIETY INTERNATIONAL SYMPOSIUM (APSIS)], NEW YORK, IEEE, US, Bd. -, 18. Juli 1992 (1992-07-18), Seiten 1073-1076, XP010065556, DOI: DOI:10.1109/APS.1992.221585 ISBN: 978-0-7803-0730-8
- SHIHUA WANG ET AL: "Delays analysis for teleoperation over internet and smith predictor with adaptive time-delay control", 2005 IEEE INTERNATIONAL CONFERENCE ON ROBOTICS AND BIOMIMETICS - ROBIO SHATIN, N.T. CHINA JULY 5, 2005, PISCATAWAY, NJ, USA,IEEE, 1. Januar 2005 (2005-01-01), Seiten 664-669, XP031001650, ISBN: 978-0-7803-9315-8

## Beschreibung

Die Erfindung betrifft ein Verfahren, das es ermöglicht ein Fahrzeug auch ohne Fahrer oder Besatzung zu führen, insbesondere in fremdem Gelände zu fahren und des weiteren weitere Funktionen des Fahrzeugs zu betätigen.

Führerlose Fahrzeuge werden insbesondere in der automatischen Fertigung oder in Gefahrenzonen eingesetzt. Diese Fahrzeuge bewegen sich jedoch ausschließlich auf bekanntem Terrain und vorgegebenen Fahrwegen. Es besteht daher lediglich die Aufgabe diese Fahrzeuge auf einem vorgegebenen Fahrweg zu führen.

Hinsichtlich Fahrzeugen, die sich in unbekanntem Gelände bewegen bzw. einem Gelände, das bekannt sein mag, in dem jedoch kein vorbestimmter Fahrweg vorhanden ist, gibt es derzeit lediglich zwei Kategorien von Systemen, die das Führen eines Fahrzeugs ohne Fahrer in einem derartigen Gelände ohne bekannten Fahrweg ermöglichen. Hierbei handelt es sich um Systeme, die ein autonomes Fahren des Fahrzeugs gestatten, bei denen das Fahrzeug beispielsweise über GPS Navigation auf einem vom System errechneten Fahrweg geführt wird. Derartige Systeme können Sensoren aufweisen, die Hindernisse, die für das Fahrzeug unüberwindbar sind oder eine Gefährdung darstellen, erkennen und selbstständig autonom eine Umfahrung dieser Hindernisse veranlassen. Das Fahrzeug bzw. das Gesamtsystem kann bei Erkennen eines derartigen Hindernisses eine alternative GPS Route ermitteln oder von der vorbestimmten GPS Route lokal abweichen, wobei das Fahrzeug auf die vorbestimmte Route zurückgeführt wird. In jedem Fall fährt das Fahrzeug grundsätzlich autonom ohne von einer Einsatzzentrale geführt zu werden.

Bei der zweiten Kategorie handelt es sich um Fahrzeuge, die ferngesteuert sind und im Sichtbereich über eine Fernsteuerung, z. B. Funkfernsteuerung, gesteuert werden. Weiterhin sind Fahrzeuge im weiteren Sinne bekannt, die in Bereichen operieren, die von der das Fahrzeug steuernden Person nicht eingesehen werden können, beispielsweise unter Wasser oder in Rohrsystemen. In diesem Fall sind die Fahrzeuge mit einer Kamera zur Aufnahme ihres Umfelds versehen, deren Bild üblicherweise über eine Kabelverbindung dem Führer, der das Fahrzeug steuert, visualisiert wird.

Das Dokument US 2004/158355 A1 beschreibt "intelligent methods, functions and apparatus for load handling and transportation mobile robots" in diesem Dokument wird zwischen autonom operierenden Fahrzeugen und Fahrzeugen, die durch einen Fahrzeugführer gesteuert werden, unterschieden. Hinsichtlich der autonom operierenden Fahrzeuge wird hervor gehoben, dass intelligente gesteuerte Fahrzeuge in der Lage sind auf unterschiedliche Anforderungen selbstständig zu reagieren. Das Dokument beschreibt ein solches intelligentes autonom operierendes Fahrzeug. Das autonom operierende Fahrzeug kann über eine Datenübertragungseinrichtung mit einer Einsatzzentrale verbunden sein. Auf diese Weise wird es ermöglicht, dass das Fahrzeug sich bei der Einsatzzentrale als startbereit meldet, woraufhin die Einsatzzentrale die Missionsdaten an das Fahrzeug übermittelt. Aufgrund dieser Datenübermittlung wird es dem Fahrzeug ermöglicht, die Mission autonom durchzuführen ohne während der Mission mit der Einsatzzentrale in Kontakt zu treten. Nach der Beendigung der Mission wird vom Fahrzeug die Erfüllung der Mission an die Einsatzzentrale gemeldet.

Aufgabe der Erfindung ist es, ein System zum Führen und Operieren eines Fahrzeugs ohne Fahrer zur Verfügung zu stellen, das es erlaubt, das Fahrzeug im Gelände ohne vorbestimmten Fahrweg auch über weitere Strecken zu führen.

Diese Aufgabe wird durch ein Verfahren gemäß Anspruch 1 gelöst.

Grundsätzlich besteht bei dem beschriebenen System das Problem, dass das Fahrzeug auf Basis von Sensordaten gesteuert wird, die erst vom Fahrzeug zur Einsatzzentrale übertragen werden müssen, wobei dann nach Abgabe der Steuerbefehle wiederum die Steuerbefehle von der Einsatzzentrale auf das Fahrzeug übertragen werden müssen. Wird hierfür eine Satellitenkommunikation verwendet, ergibt sich alleine aufgrund der Signallaufzeit über den Satelliten eine Zeitverzögerung von etwa einer halben Sekunde; bei Verwendung von Kompressionsalgorithmen jedoch eine weitere Zeitverzögerung, wodurch eine Gesamtzeitverzögerung von 1 Sekunde und mehr erreicht wird. Hierdurch wird das Führen des Fahrzeugs stark erschwert und die Fahrgeschwindigkeit des Fahrzeugs muss so niedrig gewählt werden, dass gewährleistet ist, dass bei Erkennen eines Hindernisses oder dergleichen durch die Sensoren am Fahrzeug Steuerbefehle, die auf Basis des erkannten Hindernisses kreiert wurden, noch rechtzeitig das Fahrzeug erreichen, um eine Kollision mit dem Hindernis oder dergleichen zu verhindern. Unabhängig hiervon wird die Führung des Fahrzeugs von Personen aufgrund der Zeitverzögerung als stark irritierend empfunden.

Um dieses Problem zu vermeiden oder zu vermindern, ist eine Datenaufbereitungseinrichtung vorgesehen, mittels der die in der Einsatzzentrale ankommenden Daten aufbereitet werden. Die Aufbereitung erfolgt dabei so, dass zumindest ein Teil der unvermeidlichen Zeitverzögerung kompensiert wird, d. h. die von den Sensoren erfassten tatsächlichen Daten werden so verändert, wie das System eine Veränderung dieser Daten beim Weiterfahren des Fahrzeugs erwartet. Wurde beispielsweise im zuletzt zurückgelegten Fahrweg des Fahrzeugs eine fallende Temperatur ermittelt, so kann die von dem Temperatursensor ermittelte Ist-Temperatur durch die Datenaufbereitungseinrichtung weiter vermindert werden, um einen aktuelleren Temperaturwert vorzutäuschen. Dieser künstlich aktualisierte Temperaturwert kann nachträglich durch den später dann zur Verfügung stehenden korrespondierenden Temperaturwert korrigiert und somit die weitere Vorhersage präzisiert werden. Ebenso kann durch elektronische Bildverarbeitung ein aus der Ist-Position des Fahrzeugs ermitteltes Bild unter Kenntnis der Fahrgeschwindigkeit und Fahrtrichtung derart aufbereitet werden, dass es künstlich aktualisiert wird und dem Bild entspricht, das beispielsweise erst eine Sekunde später aufgenommen wird. Auf diese Weise können Probleme, die durch die Zeitverzögerung allein bereits aufgrund der Laufzeit der Daten entstehen zumindest gemindert werden.

Wird das Fahrzeug in der Einsatzzentrale von einer Person geführt, der hierzu ein Bild, aufgenommen vom Fahrzeug in Fahrtrichtung, zur Verfügung gestellt wird, kann dieses Bild unter Berücksichtigung der Fahrgeschwindigkeit und Fahrtrichtung so aufbereitet bzw. aktualisiert werden, dass trotz der genannten Zeitverzögerung der Fahrzeugführer in der Einsatzzentrale den Eindruck gewinnt, er würde ein aktuelles Bild sehen. Ebenso können, wie dargelegt, die weiteren Daten künstlich aktualisiert werden. Gibt der Fahrzeugführer nun ein Steuersignal, so erreicht dieses Steuersignal das Fahrzeug ebenfalls mit der genannten Zeitverzögerung, d. h. das Fahrzeug ist beim Erreichen des Steuersignals bereits wieder ein Stück weiter gefahren. Das Steuersignal wurde vom Führer jedoch auf Basis eines Bilds abgegeben, das beim Eintreffen des Steuerbefehls am Fahrzeug nicht mehr aktuell ist. Es kann daher sinnvoll sein, die vom Fahrzeug abgegebenen Daten nach Empfangen der Einsatzzentrale so aufzubereiten, dass sie nicht nur die dann aktuellen Daten imitieren bzw. diesen möglichst nahe kommen, sondern um die weitere Zeitverzögerung aktualisiert werden, die entsteht, bis der Steuerbefehl das Fahrzeug erreicht. Die auf diese Weise aufbereiteten Daten stellen somit Daten dar, die die entsprechenden zukünftigen Daten vorhersagen. Das heißt, die Daten werden gewissermaßen überaktualisiert, so dass bei Eintreffen des Steuerbefehls am Fahrzeug diese zu den Daten korrespondiert, die der Führer des Fahrzeugs in der Einsatzzentrale von der Datenaufbereitungseinrichtung erhalten hat.

Hinsichtlich der Bildverarbeitung heißt das, dass dem Fahrzeugführer in der Einsatzzentrale auf Basis der Daten des Fahrzeuges ein zukünftiges künstliches Bild gezeigt wird, das soweit gehend wie möglich dem Bild entspricht, das vom Fahrzeug aufgenommen wird in dem Moment, in dem die Steuerbefehle des Fahrzeugführers wieder beim Fahrzeug eintreffen. Über eine entsprechende Rückkopplung kann die Datenaufbereitung im Sinne einer künstlichen Aktualisierung verbessert werden.

Vorteilhaft ist zur Kommunikation des Fahrzeugs mit der Einsatzzentrale eine Satellitenantenne vorgesehen, so dass der Datenaustausch zwischen Einsatzzentrale und Fahrzeug in beide Richtungen über Satellit erfolgen kann. Vorteilhaft verfügt die Satellitenantenne über eine Ausrichteinrichtung, die die Satellitenantenne automatisch auch während der Fahrt des Fahrzeugs auf einen Kommunikationssatelliten ausrichtet. Hierbei kann eine herkömmliche Satellitenantenne zum Einsatz kommen, die über eine Ausrichteinrichtung, die in der Lage ist die Satellitenantenne in den erforderlichen Achsen zu bewegen, entsprechend auf einen Satelliten ausgerichtet wird. Es kann jedoch auch eine sogenannte Phased-array-Antenne vorgesehen werden, die über eine Vielzahl kleiner fest vorgesehener Antennen verfügt, wobei eine Ausrichtung der Antenne auf einen Satelliten über die Abstimmung der Phasenlage der genannten Antennen erfolgt.

Vorteilhaft werden Sensoren verwendet, mit denen es möglich ist, die Ist-Position des Fahrzeugs zu ermitteln. Diese Ermittlung kann autonom am Fahrzeug selbst, beispielsweise über GPS Systeme erfolgen, grundsätzlich ist es jedoch auch möglich, die Ist-Position von außerhalb, beispielsweise über Peilsender, zu ermitteln, wenn beispielsweise keine GPS Informationen zur Verfügung stehen und dann die ermittelte Ist-Position dem Fahrzeug mitzuteilen.

Ebenso ist die Ermittlung der Fahrtrichtung des Fahrzeugs bzw. der Ausrichtung des stehenden Fahrzeugs in vielen Fällen sinnvoll, um beispielsweise der Ausrichteinrichtung für die Satellitenantenne die erforderlichen Daten zukommen zu lassen. Diese Himmelsrichtung kann in Fahrt des Fahrzeugs auf einfache Weise über ein GPS System ermittelt werden, bei stehendem Fahrzeug über zwei hochgenaue am Fahrzeug beabstandet vorgesehene GPS Systeme oder durch eine Erfassung von außerhalb, beispielsweise über Peilung des Fahrzeugs.

Für die Kommunikation zwischen Fahrzeug und Einsatzzentrale ist Echtzeit wünschenswert. Aufgrund der hohen Datenmengen kann eine Kompression der Daten vor Übertragung erforderlich sein. Hierzu kann eine Kompressions- und Dekompressionseinheit vorgesehen werden, um die zu übermittelnden bzw. übermittelten Daten entsprechend zu verarbeiten. Um eine möglichst geringe Zeitverzögerung zu erreichen, wird eine Datenverarbeitung bei Kompression bzw. Dekompression mit einer Zeitverzögerung von weniger als 0,6 Sekunden angestrebt.

## Patentansprüche

1. Verfahren zur Steuerung eines Fahrzeugs ohne Fahrer, bei dem Fahrzeugdaten und Signale zur Wahrnehmung der Umgebung von Sensoren am Fahrzeug aufgenommen und über eine Kommunikationseinrichtung einer Einsatzzentrale übertragen werden, wobei ein Fahrzeugführer in der Einsatzzentrale auf Basis dieser Daten Signale zur Steuerung der Fahrzeugfunktionen, insbesondere Fahrgeschwindigkeit und Fahrrichtung, über die Kommunikationseinrichtung an das Fahrzeug überträgt, **dadurch gekennzeichnet, dass** die der Einsatzzentrale übersandten Daten von einem Computer so aufbereitet werden, dass die aufbereiteten in der Einsatzzentrale verfügbaren Daten soweit wie möglich den Daten entsprechen, die in dem Zeitpunkt von den Sensoren erfasst werden, in dem die aufbereiteten Daten zur Verfügung gestellt werden, wobei insbesondere ein aus der Ist-Position des Fahrzeugs ermitteltes Bild unter Kenntnis der Fahrgeschwindigkeit und Fahrrichtung derart aufbereitet wird, dass dem Fahrzeugführer ein zukünftiges künstliches Bild gezeigt wird, das soweit wie möglich dem Bild entspricht, das vom Fahrzeug in dem Moment aufgenommen wird, in dem die Steuerbefehle des Fahrzeugführers wieder beim Fahrzeug eintreffen.

2. Verfahren nach Anspruch 1, **dadurch gekennzeichnet, dass** die Kommunikation zwischen Fahrzeug und Einsatzzentrale über Satellit erfolgt.

3. Verfahren nach Anspruch 1 oder 2, **dadurch gekennzeichnet, dass** das Fahrzeug oder die Einsatzzentrale die Position des Fahrzeugs erfasst und diese Daten von dem Fahrzeug oder Kommunikationseinrichtung zur Verfügung gestellt werden.

4. Verfahren nach einem der Ansprüche 1 bis 3, **dadurch gekennzeichnet, dass** die Himmelsrichtung, in die das Fahrzeug ausgerichtet ist oder fährt, von dem Fahrzeug oder der Einsatzzentrale erfasst wird und diese Daten von dem Fahrzeug der Kommunikationseinrichtung zur Verfügung gestellt werden.

5. Verfahren nach einem der Ansprüche 1 bis 4, **dadurch gekennzeichnet, dass** die Kommunikation über eine Kompressions-/Dekompressionseinheit erfolgt.

6. Verfahren nach einem der Ansprüche 1 bis 5, **dadurch gekennzeichnet, dass** die Kommunikation in Echtzeit erfolgt.

7. Verfahren nach einem der Ansprüche 1 bis 6, **dadurch gekennzeichnet, dass** die in der Einsatzzentrale übersandten Daten von einem Computer so aufbereitet werden, dass die aufbereiteten in der Einsatzzentrale verfügbaren Daten soweit wie möglich den Daten entsprechen, die in dem Zeitpunkt von den Sensoren erfasst werden, in dem die Einsatzdaten am Fahrzeug empfangen werden.

## Claims

1. A method for controlling a vehicle without a driver, according to which vehicle data and signals for perceiving the environment are picked up by sensors on the vehicle, and are transmitted via a communication device to an operations center, wherein a vehicle driver in the operations center uses these data for transmitting signals for controlling the vehicle functions, particularly the driving speed and the driving direction, via the communication device to the vehicle,
**characterized in that**
the data transmitted to the operations center are processed by a computer such that the processed data available in the operations center correspond as far as possible to the data detected by the sensors at the time at which the processed data are made available, wherein particularly an image established from the actual position of the vehicle is processed such, while being aware of the driving speed and the driving direction, that the vehicle driver is shown a future, artificial image which corresponds as far as possible to the image taken of the vehicle at the moment at which the vehicle driver's control commands arrive back at the vehicle.

2. The method according to claim 1,
**characterized in that**
the communication between the vehicle and the operations center is effected via satellite.

3. The method according to claim 1 or 2,
**characterized in that**
the vehicle or the operations center detects the position of the vehicle, and these data are made available by the vehicle to the communication device.

4. The method according to any one of claims 1 to 3,
**characterized in that**
the cardinal direction in which the vehicle is oriented or drives is detected by the vehicle or the operations center, and these data are made available by the vehicle to the communication device.

5. The method according to any one of claims 1 to 4,
**characterized in that**
the communication is effected via a compression/decompression unit.

6. The method according to any one of claims 1 to 5,
**characterized in that**
the communication is effected in real time.

7. The method according to any one of claims 1 to 6,
**characterized in that**
the data transmitted in the operations center are processed by a computer such that the processed data available in the operations center correspond as far as possible to the data detected by the sensors at the time at which the operational data are received on the vehicle.

## Revendications

1. Procédé de commande d'un véhicule sans conducteur, où des données de véhicule et des signaux de perception de l'environnement de capteurs sont enregistrés dans le véhicule et transmis à une centrale par un dispositif de communication, un opérateur de véhicule de la centrale transmettant au véhicule des signaux de commande des fonctions du véhicule, en particulier de la vitesse de conduite et du sens de déplacement, via le dispositif de communication sur la base desdites données, **caractérisé en ce que** les données transmises à la centrale sont traitées par un ordinateur de telle manière que les données traitées disponibles dans la centrale correspondent autant que possible aux données saisies par les capteurs au moment où les données traitées sont mises à disposition, une image déterminée à partir de la position effective du véhicule en connaissance de la vitesse de conduite et du sens de déplacement étant notamment traitée de manière à afficher pour l'opérateur de véhicule une image artificielle future qui corresponde autant que possible à l'image enregistrée du véhicule au moment où les instructions de commande de l'opérateur de véhicule sont à nouveau reçues par le véhicule.

2. Procédé selon la revendication 1, **caractérisé en ce que** la communication entre véhicule et centrale est effectuée par satellite.

3. Procédé selon la revendication 1 ou 2, **caractérisé en ce que** le véhicule ou la centrale détecte la position du véhicule, et **en ce que** cette donnée est délivrée par le véhicule au dispositif de communication.

4. Procédé selon l'une des revendications 1 à 3, **caractérisé en ce que** le point cardinal vers lequel le véhicule est orienté ou circule est détecté par le véhicule ou la centrale, et **en ce que** cette donnée est délivrée par le véhicule au dispositif de communication.

5. Procédé selon l'une des revendications 1 à 4, **caractérisé en ce que** la communication est effectuée au moyen d'une unité de compression/décompression.

6. Procédé selon l'une des revendications 1 à 5, **caractérisé en ce que** la communication est effectuée en temps réel.

7. Procédé selon l'une des revendications 1 à 6, **caractérisé en ce que** les données transmises à la centrale sont traitées par un ordinateur de telle manière que les données traitées disponibles dans la centrale correspondent autant que possible aux données saisies par les capteurs au moment où les données opérationnelles sont reçues dans le véhicule.
